# EUROPEAN PATENT SPECIFICATION

(11) **EP 4 171 326 B1**
(45) Date of publication and mention of the grant of the patent: **20.03.2024**
(21) Application number: 21730907.9
(22) Date of filing: 04.06.2021
(51) Int. Cl.: A47J 31/42, A47J 42/52, A23N 12/08

(54) **ROASTING AND PROCESSING APPARATUS FOR COFFEE BEANS**
RÖST- UND VERARBEITUNGSVORRICHTUNG FÜR KAFFEEBOHNEN
APPAREIL DE TORRÉFACTION ET DE TRAITEMENT DE GRAINS DE CAFÉ

(30) Priority: 24.06.2020 EP 20181830
(43) Date of publication of application: 03.05.2023
(73) Proprietor: Société des Produits Nestlé S.A., 1800 Vevey (CH)
(72) Inventor: AIT, BOUZIAD, Youcef, 1026 ECHANDENS (CH); YOAKIM, Alfred, 1806 ST-LEGIER-LA CHIESAZ (CH); SAVIOZ, Grégory, 1966 SAXONNE (CH)
(74) Representative: Pasquino, Fabio
(86) International application number: PCT/EP2021/065032
(87) International publication number: WO 2021/259614

(56) References cited:
- US-A1- 2014 314 921
- US-A1- 2018 000 108

## Description

### 1. Field of the invention

The present invention relates to an apparatus for roasting coffee beans and associated processing of these beans, either grinding and/or extraction of a final coffee beverage. The invention further relates to an associated method for roasting and grinding.

### 2. Technical background

In all domains of food and beverage preparation, the quality of the prepared food or beverage requires, at least: adequate quality of the raw product; right tools (machines, devices, etc.) and knowledge and skills to ensure the right preparation processes.

Hot beverage preparation, more particularly coffee preparation and its derivates, also obey the same rules.

Since the very first invention of a coffee extraction machine, the associated techniques have heavily evolved during the last decades. It is known in the state of the art that the first machine for making espresso was built and patented in 1884 by Angelo Moriondo of Turin, Italy. An improved design was later patented on April 28, 1903, by Luigi Bezzera. The founder of the La Pavoni company bought the patent and from 1905 produced espresso machines commercially on a small scale in Milan. Multiple machine designs have been created to produce espresso. Several machines share some common elements, such as a group head and a portafilter. An espresso machine may also have a steam wand which is used to steam and froth liquids (such as milk) for coffee drinks such as cappuccino and caffe latte.

Present techniques for preparing a coffee beverage involve a skilled person (called a Barista) and dedicated machines/devices to prepare the said coffee beverage. Typically in roast and ground (R&G) coffee, Baristas have the knowledge and the science of coffee to ensure the quality of the prepared cup depending on type of beverage to the prepared, the type of coffee used and the material/means used in the mentioned preparation.

Typically, depending on the type of coffee beverage to prepare (espresso, drip coffee type, cold brew, etc.), as well as on the method of extraction used (drip, Chemex, espresso machine, etc.), the Barista chooses the type of coffee (origin, roasting level, etc.), as well as the setting of each machine in the preparation method (the grinder parameters, the extraction method, the water temperature, etc.). In other words, all relies on the knowledge of the Barista, so these types of preparations need a skilled or trained person to ensure that all parameters are correctly set and that the right procedure is followed during the preparation.

Single serve based systems for preparing food or beverages, typically from the starting product comprised in a container, preferably a capsule, are well known in the state of the art. Capsule-based systems have put beverage and food extraction and/or reconstitution on a higher level in terms of:
- quality (in-cup results);
- easiness and user friendliness;
- repeatability of results.

The fact that the product used is controlled in factories until the last step (roasting, dosing, grinding) and that is tailored to the dedicated extraction system, positions the single serve system potentially higher in terms of end cup quality. Additionally, certain systems in the market use also a coding system to adapt the machine extraction parameters to the right capsule (product) used to get the best out of it.

However, the ecological impact of such systems, as well as the cost per serve, are high, especially when ending with complex technical packaging, as the capsule is used as an extraction cell, including complex functions such as water diffuser or jet, opening membrane, air suction system, filter, pyramid plate... etc.

Fully Automatic machines using roasted beans to prepare a coffee beverage are widely known in the state of the art. In the 80's fully automated machines of diverse brands (Jura, Saeco, etc.) have followed the trend of automation. Consequently, they have grouped all the functions done by a Barista (skilled person preparing coffee beverages) in a single machine, including grinding of coffee beans, dosing, tamping, as well as extraction of the coffee beverage. As a consequence, in these machines, the operator only needs to fill the bean hopper and, if the machine is not connected to a water line, add water to a reservoir. The rest is automatically done by the machine itself.

Fully Automatic machines are growing in the market as they simplify the extraction steps and can be used by a non-skilled person. However, they are bulky and complex, and more importantly, they are considered to be a compromise between preparation quality and convenience.

Fully automatic machines take away the ability to manually tamping and grinding the coffee, which may affect the quality of the espresso, as this setting cannot be changed from a beverage to another.

Typically, the grinder can be adjustable to get the right grind size for the desired beverage: however once adjusted, the same grind size is used for all the beverages. And most importantly, the machine is never adjusted by the user according to the different coffee beans used. This results in a compromise of quality and convenience of the final beverage delivered.

Patent Application US2014314921A1 describes a method for brewing a cup of coffee at a coffee brewing machine comprising receiving a coffee source identifier; retrieving a recipe for a brewing coffee bean based on the coffee source identifier; initiating a brew cycle. The characteristics of the coffee beans are not identified before roasting and therefore the same does not follow specific roasting profiles according to such identification.

Patent Application US2018000108A1 describes systems and methods for brewing coffee can include providing an integrated beverage system that can include a grinding system, a roasting system, and a brewing system. The integrated beverage system can be used with a container that can contain unroasted coffee beans or coffee grounds, where the integrated beverage system can be configured to accept the container and can roast, grind, and brew coffee. Again, the characteristic of the coffee beans are not identified before roasting and therefore the same does not follow specific roasting profiles according to such identification.

The main goal of the present invention is to achieve similar end results of those achieved with capsule systems without using single serve packaging, and/or obtaining similar results as Baristi obtain without Barista specific skills needed. The goal is to use a communication between the beans preparation device (roasting device) and the coffee processing device (coffee preparation machine and/or grinder and/or fully-automatic or semi-fully automatic machine).

By means of a wireless connection and/or an application that transfers/communicates parameters of the roasted beans (output form the roasting device) to the processing device (coffee preparation machine), the system of the invention is able to adapt the processing parameters used in order to replace the Barista (skilled person) know-how by an AI (Artificial Intelligence) system.

The system of the present invention allows the coffee machine to adjust its processing parameters according to the targeted output needed (beverage type) and as a function of the used beans (info from the roasting device). The goal is to ensure the integrity of the procedure and the information by communicating the right parameters to be used.

In difference to standalone fully automated machines, the system according to the present invention brings the right process to the right needed beverage type in function of the product.

In difference to single-serve systems (typically using capsules containing the coffee or the product to be processed), the system of the present invention does not use a single packaging for each beverage preparation, but a multipack, and uses accessory-devices for extraction/processing.

These and other objects, which become apparent upon reading the following description, are solved by the subject matter of the independent claim. The dependent claims refer to preferred embodiments of the invention.

### 3. Summary of the invention

According to a first aspect, the invention relates to a roasting and processing apparatus for coffee beans comprising a roasting device and an associated coffee processing device: the roasting device is configured for receiving coffee beans of a certain type that will be roasted, the roasting device comprising reading means to identify the characteristics of the coffee beans dispensed to it, the roasting device further comprising a control unit configuring the roasting profile of the beans according to the characteristics retrieved from the reading means and/or from the characteristics of the beans in a database in this control unit. The roasted coffee beans are transferred into a coffee processing device for beverage preparation: the roasting device comprises a data transfer function to communicate product parameters of the roasted coffee beans of a certain type to the coffee processing device.

The coffee processing device of the invention receives roasted coffee beans of one or more types from the roasting device: the coffee processing device comprises a data reader to obtain the information of the product parameters of the roasted coffee beans; the coffee processing device further comprises a control unit configured to adapt the processing parameters used for the beverage preparation as a function of the product parameters of the roasted coffee beans.

Preferably, in the roasting and processing apparatus for coffee beans according to the invention, the coffee processing device comprises a coffee grinder and/or a coffee beverage extraction device.

Typically, the processing parameters used for the beverage preparation in the roasting and processing apparatus for coffee beans according to the invention comprise grinding and/or partial grinding parameters and/or coffee extraction parameters.

According to a preferred embodiment, the coffee beans are green and/or partially roasted coffee beans.

Preferably, in the roasting and processing apparatus for coffee beans of the invention, the coffee beans received by the roasting device comprise identification means with the characteristics of these coffee beans, to be read by the reading means in the roasting device, these identification means being optical identification means, such as a barcode, OID and/or a QR code, and/or electromagnetical identification means such as a RFID tag.

Also preferably, the characteristics of the coffee beans received by the roasting device in the roasting and processing apparatus for coffee beans of the invention are one or a plurality of the following: coffee beans type, coffee beans origin, batch volume, recommended roasting level or levels, date of harvest, date of production, production data, farmer data, date of expiration, company and or marketing info.

Typically, the product parameters of the roasted coffee beans of a certain type in the roasting and processing apparatus for coffee beans of the invention comprise the characteristics of the coffee beans and one or a plurality of the following: roasting level, roasting profile, CTN, aroma profile chart, adequate beverage recommendation, roasting date, best limit consumption date.

According to a preferred embodiment, the processing parameters used by the coffee processing device for the beverage preparation in the roasting and processing apparatus for coffee beans of the invention are adapted as a function of the type of beverage to be prepared, in combination with the product parameters of the roasted coffee beans.

Preferably, the data transfer function between the roasting device and the associated coffee processing device in the roasting and processing apparatus for coffee beans of the invention is of wireless type such as Wifi, Bluetooth or NFC.

According to another embodiment, the data transfer function between the roasting device and the associated coffee processing device in the roasting and processing apparatus for coffee beans of the invention is of wired type such as serial communication.

Typically, in the roasting and processing apparatus for coffee beans of the invention, the roasting device has data transmission function of wireless type such as Wifi, Bluetooth or NFC and/or of wired type such as serial.

Preferably, in the roasting and processing apparatus for coffee beans of the invention, the coffee processing device has data receiving function of wireless type such as Wifi, Bluetooth or NFC and/or of wired type such as serial.

Typically, in the roasting and processing apparatus for coffee beans of the invention, the data between the roasting device and the associated coffee processing device are transferred directly between the two devices and/or indirectly via a third mean (bridge) such as smartphone application or cloud service.

According to a second aspect, the invention relates to a method for roasting and processing coffee beans using a roasting and processing apparatus as the one described. The method of the invention comprises the following steps:
- dispensing a certain quantity of coffee beans in the roasting device;
- reading the characteristics of the coffee beans dispensed;
- carrying out a roasting process according to the characteristics read and/or a database information and/or a user's choice or selection;
- delivering the roasted coffee beans into a processing apparatus with encoded product parameters of these coffee beans;
- reading the product parameters in the processing apparatus;
- carrying out the grinding and/or the beverage preparation according to the product parameters read.

Yet according to another aspect, the invention further relates to the use of a roasting and processing apparatus as the one described for delivering a coffee beverage of a certain type and/or a certain quantity of grinded coffee.

Further features, advantages and objects of the present invention will become apparent for a skilled person when reading the following detailed description of non-limiting embodiments of the present invention, when taken in conjunction with the appended drawings.

### 4. Description of a preferred embodiment

In the following, the invention is described exemplarily with reference to the enclosed figures, in which
Figure 1 is an exemplary functional diagram of a roasting, grinding, extraction system according to an embodiment of the invention.
Figure 2 is an exemplary functional diagram of a dosing, extraction system according to an embodiment of the invention.
Figure 3 is a schematic view of a dispensing, extraction system according to an embodiment of the invention.
Figure 4 is a schematic view of a roasting, grinding, extraction system according to an embodiment of the invention.
Figure 5 is a schematic view of a roasting, grinding system according to an embodiment of the invention.
Figure 6 is a schematic representative view of a roasting, grinding, extraction system according to an embodiment of the invention.
Figure 7 is a schematic representative view of a roasting, grinding, extraction system according to an embodiment of the invention, showing the different elements belonging to it.
Figure 8 is a schematic representative view of the roasting, grinding, extraction system in Figure 7, showing the reading of identification means in the container comprising the coffee beans.
Figure 9 is a schematic representative view of the roasting, grinding, extraction system in Figure 7, showing the delivery of the coffee beans into the roasting device.
Figure 10 is a schematic representative view of the roasting, grinding, extraction system in Figure 7, showing the process of roasting the coffee beans in the roasting device.
Figure 11 is a schematic representative view of the roasting, grinding, extraction system in Figure 7, showing the plugging of a container in the grinding or dispensing device.
Figure 12 is a schematic representative view of the roasting, grinding, extraction system in Figure 7, showing two containers plugged in the grinding or dispensing device.
Figure 13 is a schematic representative view of the roasting, grinding, extraction system in Figure 7, showing the reading of identification means in the container comprising the coffee beans.
Figure 14 is a schematic representative view of the roasting, grinding, extraction system in Figure 7, showing the beverage finally dispensed in a cup.
Figure 15 is a schematic representative view of the roasting, grinding, extraction system in Figure 7, showing the dispensing of the beverage in a cup.
Figure 16 is a schematic representative view of the roasting, grinding, extraction system in Figure 7, showing the system prepared for dispensing a beverage.
Figure 17 is a schematic representative view of the roasting, grinding, extraction system in Figure 7, showing the dispensing of grinded coffee for the further preparation of a beverage.
Figure 18 is a schematic representative view of the roasting, grinding, extraction system in Figure 17, showing the grinded coffee arranged in the preparation device, ready to prepare a beverage.
Figure 19 is a schematic representative view of the roasting, grinding, extraction system in Figure 7, showing the possibility of plugging in the grinding device several containers comprising different types of coffee beans.
Figure 20 is a schematic representative view of the roasting, grinding, extraction system in Figure 7, showing different containers comprising different types of coffee beans that can be plugged in the grinding device in order to obtain different coffee blends.

The main goal of the present invention is to achieve similar end results as the ones achieved with a capsule system without using any single serve packaging, and without specific skills needed. The goal of the invention, as it will be explained in more detail in what follows, is to build main-devices that communicate among them via accessory-devices, that transfer/communicate parameters in order to replace the Barista (skilled person) know-how by an AI (Artificial Intelligence) system.

The system of the present invention adjusts each main-device parameters (inputs), according to the outputs of the main-device used in the previous phase. The goal is to ensure the integrity of the procedure and of the information by communicating the right parameters to be used.

In difference to fully automated machines, the system of the invention further allows more flexibility by using different accessory-devices (tailored to the right preparation: typically accessory devices for Espresso, Drip coffee, Soluble Coffee, etc.) between the main-devices.

In difference to single serve systems (typically preparing a beverage from a capsule or single-dose container), the system of the invention does not use a single packaging for each preparation, but a multipack, and uses accessory-devices for the extraction/processing.

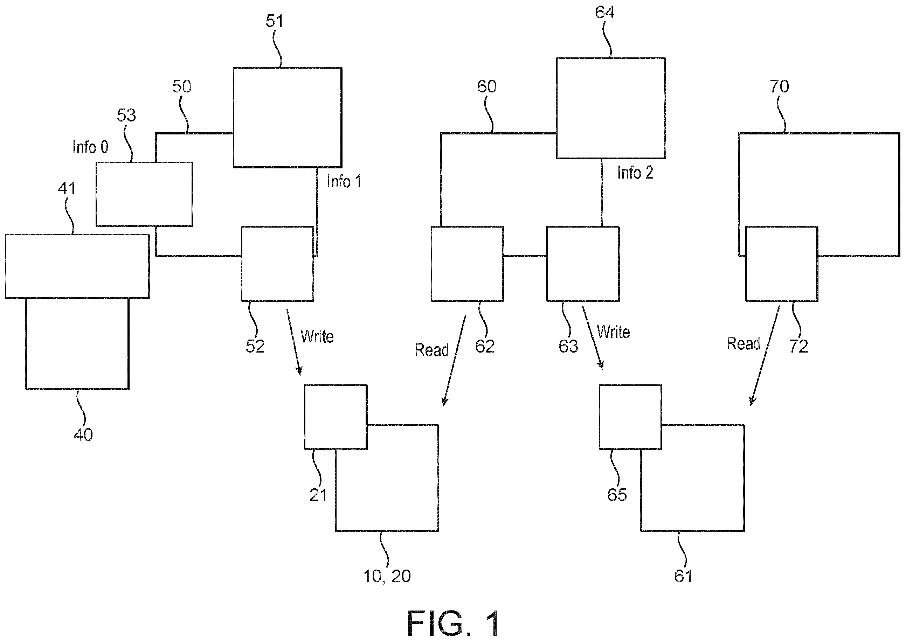

Looking at Figure 1, it shows a roasting device 50 comprising a reader 53 and an encoder 52. The reader 53 is able to retrieve the information on the identification means 41 of a container 40 comprising coffee beans: these coffee beans can be green or partially roasted or a mixture of the two. The identification means 41 comprise the Information 0 of the coffee beans in the container 40, as represented schematically in Figure 1. This Information 0 can comprise one or a plurality of the following information: coffee beans type, coffee beans origin, batch volume, recommended roasting level, date of expiration, etc. The identification means 41 in the container 40 can be optical (barcode, QR code, OID) or electromagnetically readable codes (typically, a RFID code).The roasting device 50 further comprises a control unit configuring the roasting profile of the beans according to the characteristics retrieved from the reading means 53 and/or from the characteristics of the beans in a database 51 in this control unit and/or according to the user's input. The roasting device 50 therefore makes the roasting of the green beans, partially roasted beans or the mixture of the two based on this information, and then delivers the roasted coffee beans into a beans container 10, 20. The beans container 10, 20 comprises programmable identification means 21 where product parameters of the roasted coffee beans of a certain type are encoded on it by an encoder 52 in the roasting device. Th information encoded on the beans containers 10, 20 is named as Information 1 in the schematic diagram of Figure 1, and this Information 1 comprises one or a plurality of the following information: Information 0 as explained above and roasting level, date of roasting, coffee origin, roasting profile, roasting date, etc.

The system of the invention further comprises a grinding device 60 comprising one or more housings for receiving one or more beans containers 10, 20. The grinding device 60 comprises a reader 62 to obtain the information of the product parameters (Information 1) of the roasted coffee beans of the one or more beans containers 10, 20. The grinding device 60 further comprises a control unit configured to adapt the grinding size and the quantity of roasted coffee beans to be delivered from the coffee beans containers 10, 20 for obtaining a certain coffee quantity and/or a certain coffee blend quantity from each beans container to be grinded according to these product parameters (Information 1) and/or according to a recipes database 64, and/or according to the user's input.

The grinded coffee is delivered from the grinding device 60 into a product holder 61: this product holder 61 comprises programmable identification means 65, where the encoder 63 in the grinding device 60 can encode the beverage information (called Information 2). This information will comprise one or a plurality of the following: beverage type, volume of the beverage to prepare, beverage temperature, pump profile, etc. The product holder 61 comprising the beverage information (Information 2) with the grinded coffee, will then be transferred to a preparation or extraction device 70, where the final beverage (the coffee beverage) will be prepared and delivered into a cup. The preparation device 70 comprises reading means 72 able to retrieve the beverage information (Information 2) from the identification means 65 in the product holder 61 and therefore make the beverage preparation (beverage extraction) according to this information.

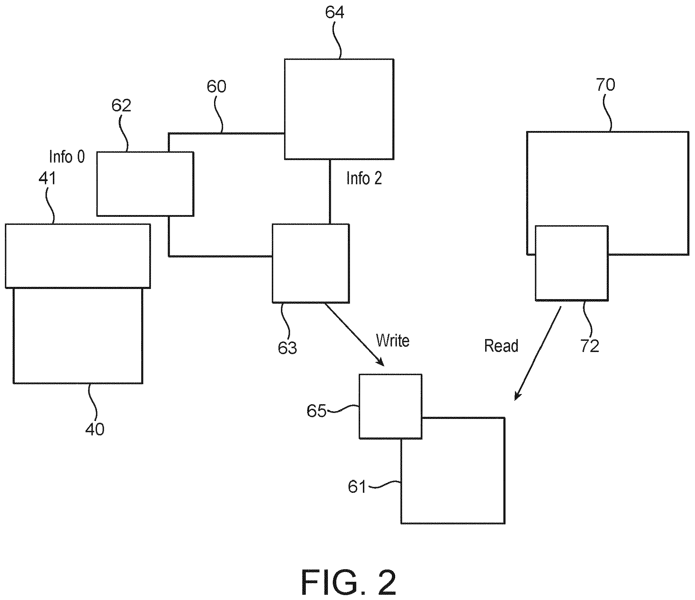

Looking now at Figure 2, an embodiment of the system of the invention is shown, particularly referring to a food product comprised in container 40 in the form of a powder. Similarly, the container 40 will be provided with identification means 41, optical (barcode, QR code, OID) or electromagnetically readable codes (typically, a RFID code) comprising the product information (Information 0 of the product type, such as coffee or milk, etc, and the date of expiration, for example). The system will comprise a dispensing device (60) comprising a reader 62 to retrieve the information on the product from the container 40 and therefore make the dosing according to this information (Information 0). The dispensing device 60 can also be a grinding device, as explained in the previous Figure. According to a preferred embodiment, the powdered product will be comprised in a container 10, 20. The dispensing device 60 further comprises a control unit configured to dispense a certain amount of powdered food or beverage product from a container (either 40 or 10, 20) according to these product parameters (Information 0) and/or according to a recipes database 64 as a function of the beverage to be prepared. The dispensing device 60 further comprises an encoder 63 to encode the beverage information (Information 2) on programmable identification means 65 on a product holder 61 in the dispensing device 60, to where the dispensed powdered food or beverage product is sent. Similarly as to the embodiment described in Figure 1, the product holder 61 will be transferable into an extraction or preparation device 70 to prepare and dispense the final food or beverage product. The preparation device 70 will comprise a reader 72 to retrieve the beverage information (Information 2) from the identification means 65 in the product holder 61, and prepare the beverage accordingly. This Information 2 will comprise one or a plurality of the following: beverage type, volume of the beverage to prepare, beverage temperature, pump profile, etc.

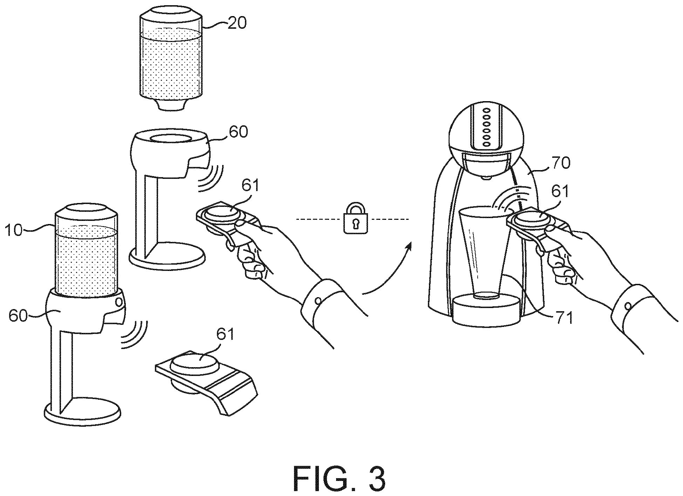

The embodiment represented functionally in Figure 2 is shown schematically in Figure 3: a dispensing device 60 receives a certain product container 10 comprising a certain type of a powder product (milk in powder, for example). The dosing device 60 reads the identification means in this container 10 and so retrieves the product information, therefore knowing which amount of milk powder has to be delivered into the product holder 61 for a certain beverage to be prepared (according to the user's input and/or to the information retrieved in a recipes database 64). A container 20 with another type of powdered product (coffee, for example) is plugged into the dosing device 60. The dosing device will read the information on this product and will deliver the amount needed on the product holder 61 for the beverage to be prepared (according to the user's input and/or to the information retrieved in a recipes database 64). The encoder 63 in the dosing device 60 will then encode the beverage information (Information 2) on the product holder 61 according to the user's input and/or to a recipes database 64. When the product holder 61 will be plugged in a preparation device 70, for the beverage preparation, the Information 2 for the certain beverage extraction will be retrieved by the device 70 so the preparation will be done according to certain parameters.

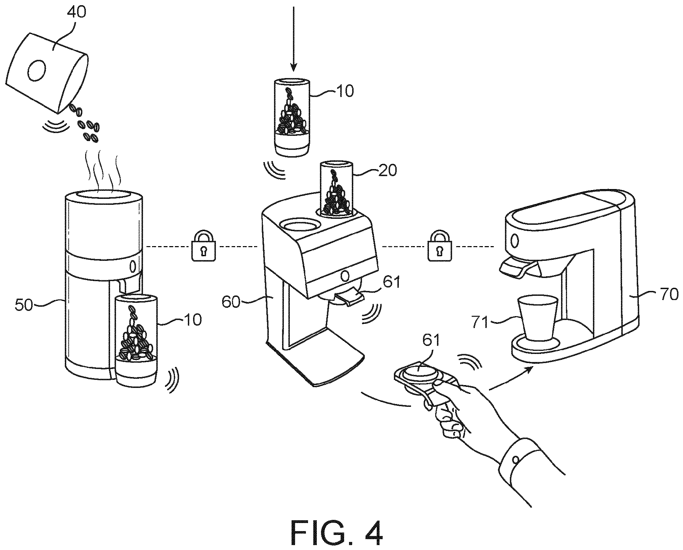

The functional diagram in Figure 1 is represented schematically in Figure 4. A container 40 with coffee beans (green and/or partially roasted) dispenses the beans into a roasting device 50. The Information 0 is read by the roasting device 50 so the roasting takes place according to certain parameters. The roasted coffee beans are delivered in a container 10. Similarly, a different type of coffee beans can be roasted in the roasting device 50 according to different parameters and can be delivered in a container 20. The containers 10, 20 can be plugged into a grinding device 60 where a certain amount of each one of the roasted beans from each of the containers 10, 20 can be sent into a product holder 61. This product holder 61 will be encoded with the beverage information (Information 2) so, when transferred into a dispensing or extraction device 70, the beverage preparation will take place according to certain parameters. The final beverage will be delivered into a cup 71, for example.

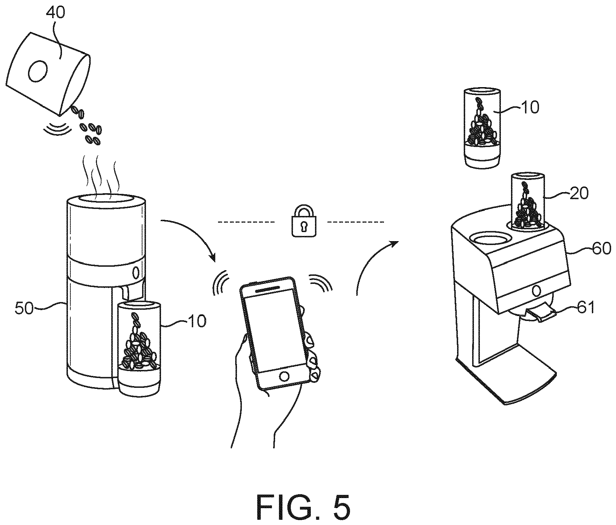

Still another embodiment of the system of the invention is represented in Figure 5. The roasting device 50 is configured for receiving coffee beans of a certain type from a container 40: these beans will be roasted. The roasting device 50 comprises reading means 53 to identify the characteristics of the coffee beans dispensed to it, and further comprises a control unit configuring the roasting profile of the beans according to the characteristics retrieved from the reading means and/or from the characteristics of the beans in a database in this control unit and/or according to the user input. The roasted coffee beans are sent into a container 10 and are then transferred into a processing device 60. The processing device 60 can be a grinding device where the beans will be grinded (also another certain amount from a different container 20), sent to a product holder 61 that will then be transferred into a beverage preparation device 70 for the final beverage dispensing, or the processing device (not shown) can be a grinding device and a preparation or extraction device (functionalities of the device 60 and 70 together).

The roasting device 50 comprises a data transfer function to communicate product parameters of the roasted coffee beans of a certain type to the coffee processing device (grinding device or grinding and extraction device).

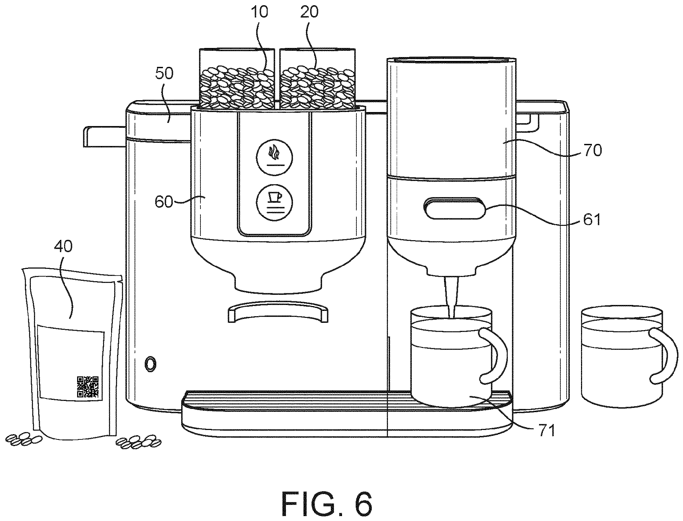

An schematic representation of the system of the invention is shown in Figure 6. The container 40 comprises coffee beans (green and/or partially roasted) that will be roasted in the device 50 and sent into containers 10, 20 for different types of coffee beans. The containers 10, 20 will be plugged in a grinding device 60 to deliver a certain blend into a product holder 61 that, when plugged in a preparation device 70, will deliver the coffee beverage into a cup 71.

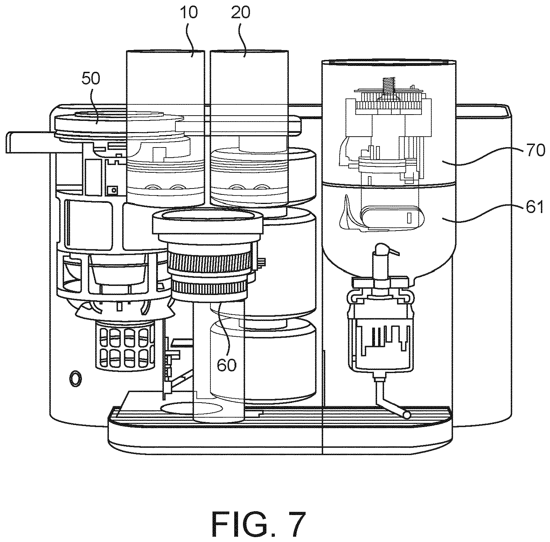

Figure 7 represents the main components and connections of the system represented in Figure 6, namely the roasting device 50, the containers 10, 20, the dispensing or grinding device 60 and the preparation or extraction device 70.

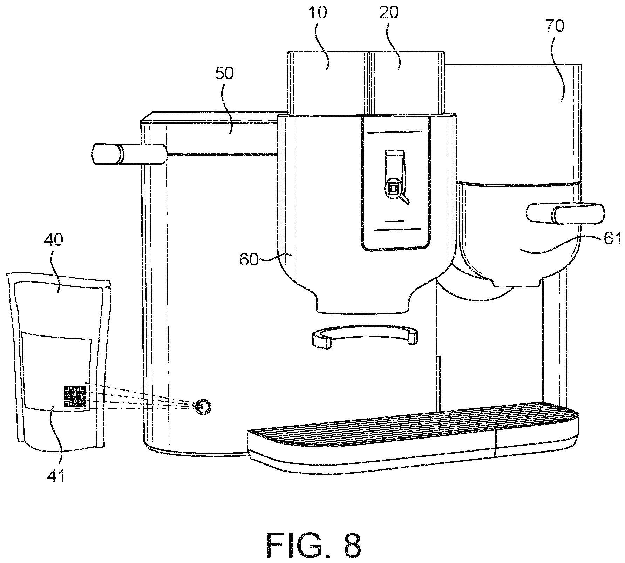

Figure 8 shows the identification means 41 in the container 40 comprising the coffee beans. These identification means 41 will comprise the information on the coffee beans type and/or origin and/or the batch volume and/or date of expiration and/or recommended roasting level, amongst other information. The reading means 53 in the roasting device 50 will retrieve this information and will consequently do the roasting according to certain parameters.

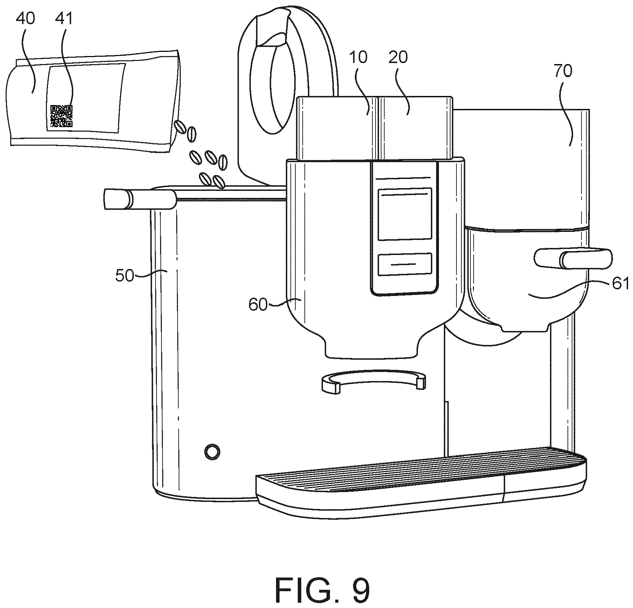

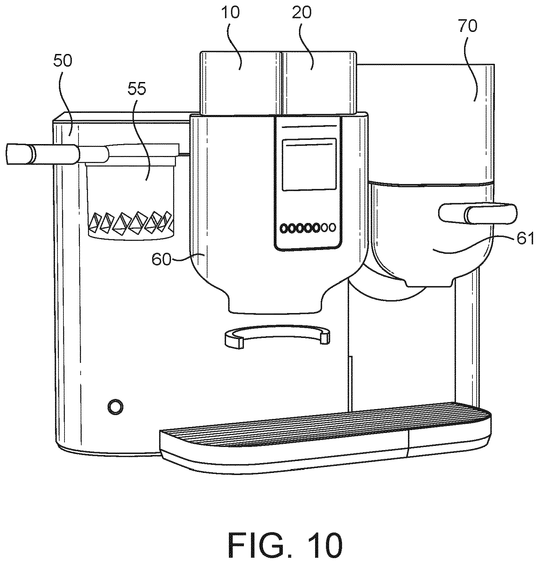

Figure 9 shows the beans from the container 40 being delivered into the roasting device 50 for being roasted, before being sent to one of the containers 10, 20 and then to the grinding device 60. Figure 10 shows the roasting step of the beans (green and/or partially roasted) in the roasting device 50.

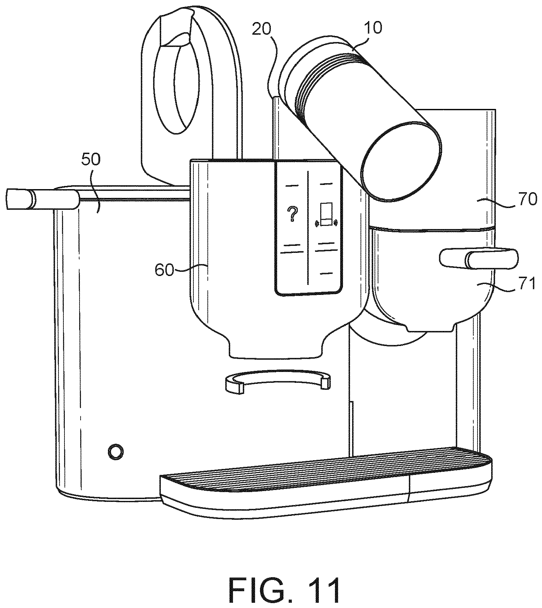

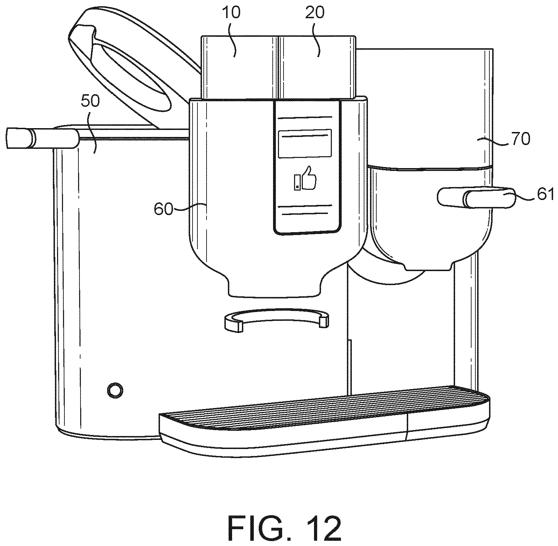

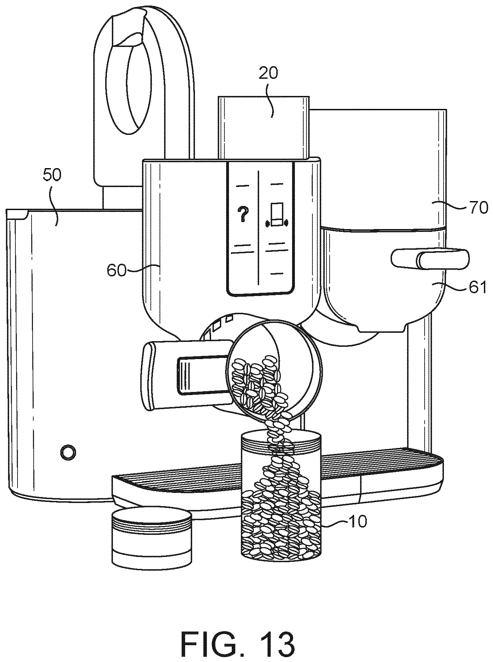

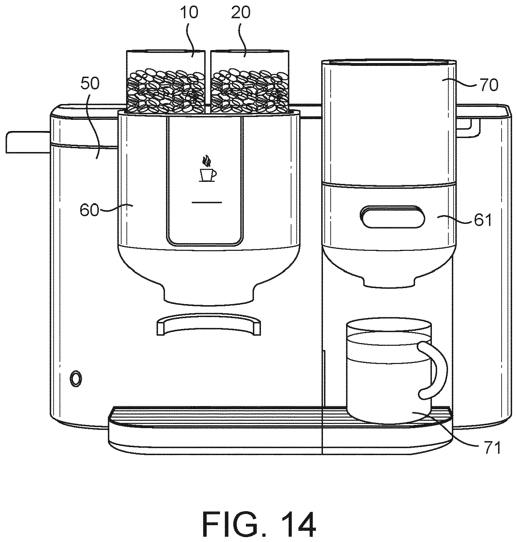

The roasting device 50 opens (Figure 12) and one of the containers 10 or 20 plugged in the grinding device 60 is unplugged from it (Figure 11) so it can receive the roasted beans coming from the roasting device 50 (Figure 13). Typically, the roasting device 50 will comprise a removable basket to where the unroasted and/or partially roasted beans are delivered from the container 40 and where they are later roasted. The basket will be able to be removed from the roasting device 50 and then the roasted beans can be sent into a container 10 or 20 that will be later plugged into a grinding device 60 (Figure 14).

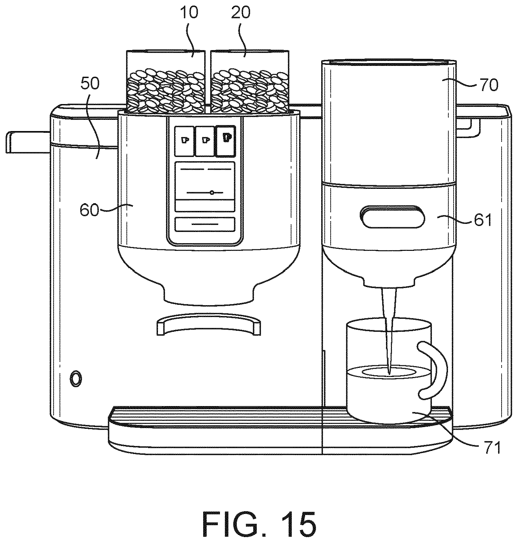

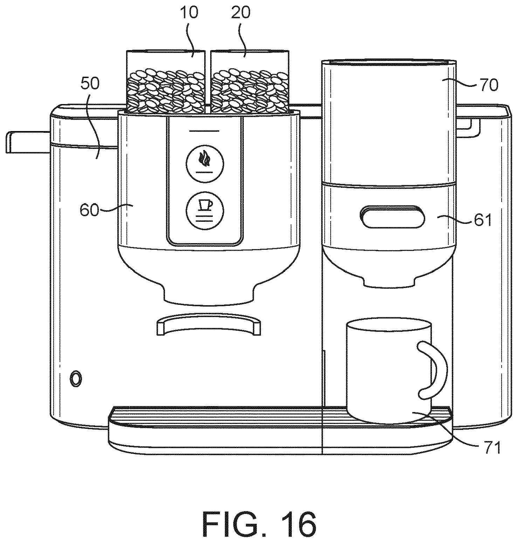

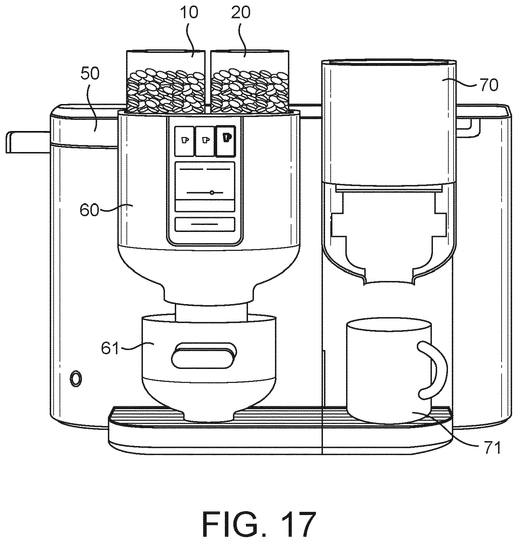

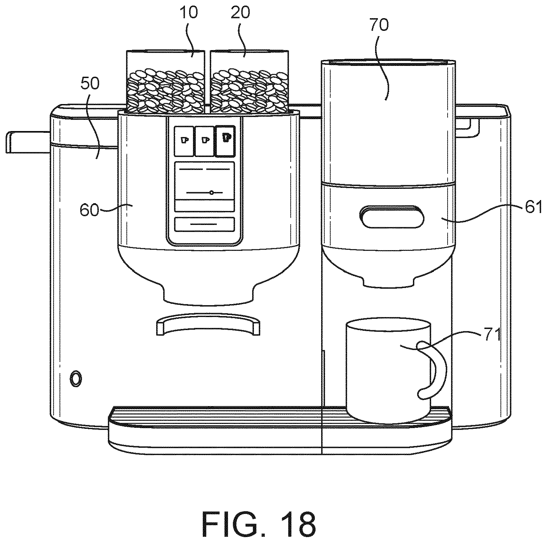

Figure 16 shows schematically the roasting step in the system of the invention. Once the roasting is finished, grinding takes place (Figure 18) and the grinded coffee (coffee blend) is sent into a product holder 61 (Figure 17) that will be then plugged into a preparation or extraction device 70: the beverage preparation in the preparation or extraction device 70 and its delivery into a cup 71 is sown in Figure 15.

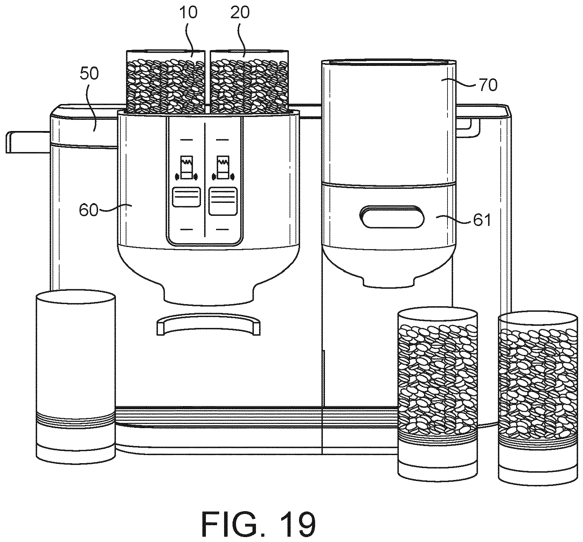

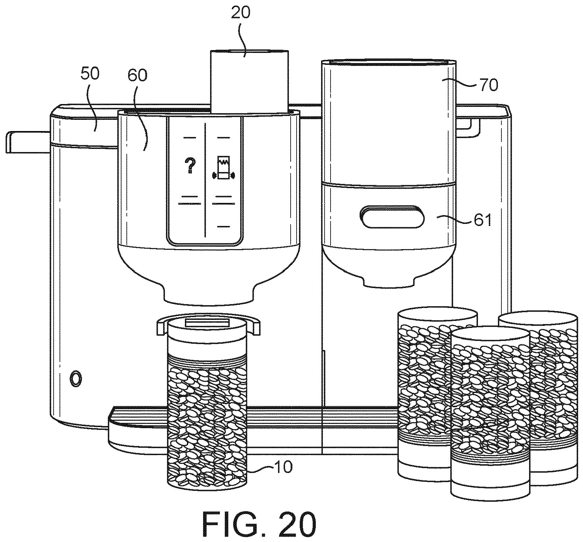

Figures 19 and 20 show schematically different types of coffee beans that can be in different containers 10, 20 so different coffee blends can be prepared. The system of the invention allows a high versatility and the containers 10, 20 can be quickly plugged and unplugged in the grinding or dispensing device 60 (plug and play type system).

## Claims

1. Roasting and processing apparatus for coffee beans comprising a roasting device (50) and an associated coffee processing device (60, 70);
the roasting device (50) being configured for receiving coffee beans of a certain type that will be roasted; the roasted coffee beans being transferred into a coffee processing device (60, 70) for beverage preparation, the roasting device (50) comprising a data transfer function to communicate product parameters of the roasted coffee beans of a certain type to the coffee processing device (60, 70);
the coffee processing device (60, 70) receiving roasted coffee beans of one or more types from the roasting device (50); the coffee processing device comprising a data reader (62, 72) to obtain the information of the product parameters of the roasted coffee beans; the coffee processing device (60, 70) further comprising a control unit configured to adapt the processing parameters used for the beverage preparation as a function of the product parameters of the roasted coffee beans;
**characterized by**
the roasting device comprising reading means (53) to identify the characteristics of the coffee beans dispensed to it, the roasting device (50) further comprising a control unit configuring the roasting profile of the beans according to the characteristics retrieved from the reading means (53) and/or from the characteristics of the beans in a database (51) in this control unit.

2. Roasting and processing apparatus for coffee beans according to claim 1 wherein the coffee processing device (60, 70) comprises a coffee grinder (60) and/or a coffee beverage extraction device (70).

3. Roasting and processing apparatus for coffee beans according to any of claims 1-2 wherein the processing parameters used for the beverage preparation comprise grinding and/or partial grinding parameters and/or coffee extraction parameters.

4. Roasting and processing apparatus for coffee beans according to any of the previous claims wherein the coffee beans are green and/or partially roasted coffee beans.

5. Roasting and processing apparatus for coffee beans according to any of the previous claims wherein the coffee beans received by the roasting device (50) comprise identification means (41) with the characteristics of these coffee beans, to be read by the reading means (53) in the roasting device (50), these identification means (41) being optical identification means, such as a barcode, OID and/or a QR code, and/or electromagnetical identification means such as a RFID tag.

6. Roasting and processing apparatus for coffee beans according to any of the previous claims wherein the characteristics of the coffee beans received by the roasting device (50) are one or a plurality of the following: coffee beans type, coffee beans origin, batch volume, recommended roasting level or levels, date of harvest, date of production, production data, farmer data, date of expiration, company and or marketing info.

7. Roasting and processing apparatus for coffee beans according to any of the previous claims wherein the product parameters of the roasted coffee beans of a certain type comprise the characteristics of the coffee beans and one or a plurality of the following: roasting level, roasting profile, CTN, aroma profile chart, adequate beverage recommendation, roasting date, best limit consumption date.

8. Roasting and processing apparatus for coffee beans according to any of the previous claims, wherein the processing parameters used by the coffee processing device (60, 70) for the beverage preparation are adapted as a function of the type of beverage to be prepared, in combination with the product parameters of the roasted coffee beans.

9. Roasting and processing apparatus for coffee beans according to any of the previous claims wherein the data transfer function between the roasting device (50) and the associated coffee processing device (60, 70) is of wireless type such as Wifi, Bluetooth or NFC.

10. Roasting and processing apparatus for coffee beans according to any of claims 1-8 wherein the data transfer function between the roasting device (50) and the associated coffee processing device (60, 70) is of wired type such as serial communication.

11. Roasting and processing apparatus for coffee beans according to any of the previous claims wherein the roasting device (50) has data transmission function of wireless type such as Wifi, Bluetooth or NFC and/or of wired type such as serial.

12. Roasting and processing apparatus for coffee beans according to any of the previous claims wherein the coffee processing device (50) has data receiving function of wireless type such as Wifi, Bluetooth or NFC and/or of wired type such as serial.

13. Roasting and processing apparatus for coffee beans according to any of the previous claims wherein the data between the roasting device (50) and the associated coffee processing device (60, 70) are transferred directly between the two devices and/or indirectly via a third mean (bridge) such as smartphone application or cloud service.

14. Method for roasting and processing coffee beans using a roasting and processing apparatus according to any of claims 1-13, comprising the following steps:
- dispensing a certain quantity of coffee beans in the roasting device (50);
- reading the characteristics of the coffee beans dispensed;
- carrying out a roasting process according to the characteristics read and/or a database information and/or a user's choice or selection;
- delivering the roasted coffee beans into a processing apparatus (60, 70) with encoded product parameters of these coffee beans;
- reading the product parameters in the processing apparatus;
- carrying out the grinding and/or the beverage preparation according to the product parameters read.

15. Use of a roasting and processing apparatus according to any of claims 1-13 for delivering a coffee beverage of a certain type and/or a certain quantity of grinded coffee.

## Patentansprüche

1. Röst- und Verarbeitungseinrichtung für Kaffeebohnen, umfassend eine Röstvorrichtung (50) und eine zugehörige Kaffeeverarbeitungsvorrichtung (60, 70);
wobei die Röstvorrichtung (50) zum Aufnehmen von Kaffeebohnen einer gewissen Art, die geröstet werden, konfiguriert ist; wobei die gerösteten Kaffeebohnen für eine Getränkezubereitung in eine Kaffeeverarbeitungsvorrichtung (60, 70) übertragen werden, die Röstvorrichtung (50) umfassend eine Datenübertragungsfunktion, um Produktparameter der gerösteten Kaffeebohnen einer gewissen Art an die Kaffeeverarbeitungsvorrichtung (60 ,70) zu kommunizieren;
wobei die Kaffeeverarbeitungsvorrichtung (60, 70) geröstete Kaffeebohnen einer oder mehrerer Arten von der Röstvorrichtung (50) aufnimmt; die Kaffeeverarbeitungsvorrichtung umfassend einen Datenleser (62, 72), um die Informationen der Produktparameter der gerösteten Kaffeebohnen zu erhalten; die Kaffeeverarbeitungsvorrichtung (60, 70) ferner umfassend eine Steuereinheit, die konfiguriert ist, um die für die Getränkezubereitung verwendeten Verarbeitungsparameter in Abhängigkeit von den Produktparametern der gerösteten Kaffeebohnen anzupassen;
**dadurch gekennzeichnet, dass** die Röstvorrichtung ein Lesemittel (53) umfasst, um die Eigenschaften der an sie abgegebenen Kaffeebohnen zu identifizieren, die Röstvorrichtung (50) ferner umfassend eine Steuereinheit, die das Röstprofil der Bohnen gemäß den von dem Lesemittel (53) abgerufenen Eigenschaften und/oder von den Eigenschaften der Bohnen in einer Datenbank (51) in dieser Steuereinheit konfiguriert.

2. Röst- und Verarbeitungseinrichtung für Kaffeebohnen nach Anspruch 1, wobei die Kaffeeverarbeitungsvorrichtung (60, 70) eine Kaffeemühle (60) und/oder eine Kaffeegetränkeextraktionsvorrichtung (70) umfasst.

3. Röst- und Verarbeitungseinrichtung für Kaffeebohnen nach einem der Ansprüche 1 bis 2, wobei die für die Getränkezubereitung verwendeten Verarbeitungsparameter Mahl- und/oder Teilmahlparameter und/oder Kaffeeextraktionsparameter umfassen.

4. Röst- und Verarbeitungseinrichtung für Kaffeebohnen nach einem der vorstehenden Ansprüche, wobei die Kaffeebohnen rohe und/oder teilweise geröstete Kaffeebohnen sind.

5. Röst- und Verarbeitungseinrichtung für Kaffeebohnen nach einem der vorstehenden Ansprüche, wobei die durch die Röstvorrichtung (50) aufgenommenen Kaffeebohnen Identifikationsmittel (41) mit den Eigenschaften dieser Kaffeebohnen, die durch das Lesemittel (53) in der Röstvorrichtung (50) zu lesen sind, umfassen, wobei diese Identifikationsmittel (41) optische Identifikationsmittel, wie ein Barcode, OID und/oder ein QR-Code, und/oder elektromagnetische Identifikationsmittel wie ein RFID-Tag sind.

6. Röst- und Verarbeitungseinrichtung für Kaffeebohnen nach einem der vorstehenden Ansprüche, wobei die Eigenschaften der durch die Röstvorrichtung (50) aufgenommenen Kaffeebohnen eine oder eine Vielzahl der Folgenden sind: Kaffeebohnenart, Kaffeebohnenherkunft, Chargenvolumen, empfohlene Röststufe oder -stufen, Erntedatum, Produktionsdatum, Produktionsdaten, Daten eines Farmers, Ablaufdatum, Unternehmens- und/oder Marketinginfos.

7. Röst- und Verarbeitungseinrichtung für Kaffeebohnen nach einem der vorstehenden Ansprüche, wobei die Produktparameter der gerösteten Kaffeebohnen einer gewissen Art die Eigenschaften der Kaffeebohnen und eines oder eine Vielzahl der Folgenden umfassen: Röststufe, Röstprofil, CTN, Aromaprofildiagramm, adäquate Getränkeempfehlung, Röstdatum, beste Endverbrauchszeit.

8. Röst- und Verarbeitungseinrichtung für Kaffeebohnen nach einem der vorstehenden Ansprüche, wobei die durch die Kaffeeverarbeitungsvorrichtung (60, 70) für die Getränkezubereitung verwendeten Verarbeitungsparameter in Abhängigkeit von der Art des zuzubereitenden Getränks, in Kombination mit den Produktparametern der gerösteten Kaffeebohnen, angepasst werden.

9. Röst- und Verarbeitungseinrichtung für Kaffeebohnen nach einem der vorstehenden Ansprüche, wobei die Datenübertragungsfunktion zwischen der Röstvorrichtung (50) und der zugehörigen Kaffeeverarbeitungsvorrichtung (60, 70) von drahtloser Art wie WLAN, Bluetooth oder NFC ist.

10. Röst- und Verarbeitungseinrichtung für Kaffeebohnen nach einem der Ansprüche 1 bis 8, wobei die Datenübertragungsfunktion zwischen der Röstvorrichtung (50) und der zugehörigen Kaffeeverarbeitungsvorrichtung (60, 70) von drahtgebundener Art wie eine serielle Kommunikation ist.

11. Röst- und Verarbeitungseinrichtung für Kaffeebohnen nach einem der vorstehenden Ansprüche, wobei die Röstvorrichtung (50) die Datenübertragungsfunktion von drahtloser Art wie WLAN, Bluetooth oder NFC und/oder von drahtgebundener Art wie seriell aufweist.

12. Röst- und Verarbeitungseinrichtung für Kaffeebohnen nach einem der vorstehenden Ansprüche, wobei die Kaffeeverarbeitungsvorrichtung (50) eine Datenaufnahmefunktion von drahtloser Art wie WLAN, Bluetooth oder NFC und/oder von drahtgebundener Art wie seriell aufweist.

13. Röst- und Verarbeitungseinrichtung für Kaffeebohnen nach einem der vorstehenden Ansprüche, wobei die Daten zwischen der Röstvorrichtung (50) und der zugehörigen Kaffeeverarbeitungsvorrichtung (60, 70) zwischen den zwei Vorrichtungen direkt und/oder über ein drittes Mittel (Brücke), wie eine Smartphone-Anwendung oder einen Cloud-Dienst, indirekt übertragen werden.

14. Verfahren zum Rösten und Verarbeiten von Kaffeebohnen unter Verwendung einer Röst- und Verarbeitungseinrichtung nach einem der Ansprüche 1 bis 13, umfassend die folgenden Schritte:
- Abgeben einer gewissen Menge an Kaffeebohnen in die Röstvorrichtung (50);
- Lesen der Eigenschaften der abgegebenen Kaffeebohnen;
- Durchführen eines Röstvorgangs gemäß den gelesenen Eigenschaften und/oder Datenbankinformationen und/oder einer Wahl oder Auswahl eines Benutzers;
- Bereitstellen der gerösteten Kaffeebohnen in eine Verarbeitungseinrichtung (60, 70) mit codierten Produktparametern dieser Kaffeebohnen;
- Lesen der Produktparameter in der Verarbeitungseinrichtung;
- Durchführen des Mahlens und/oder der Getränkezubereitung gemäß den gelesenen Produktparametern.

15. Verwendung einer Röst- und Verarbeitungseinrichtung nach einem der Ansprüche 1 bis 13 zum Bereitstellen eines Kaffeegetränks einer gewissen Art und/oder einer gewissen Menge an gemahlenem Kaffee.

## Revendications

1. Appareil de torréfaction et de traitement pour grains de café comprenant un dispositif de torréfaction (50) et un dispositif de traitement de café associé (60, 70) ;
le dispositif de torréfaction (50) étant configuré pour recevoir des grains de café d'un certain type qui seront torréfiés ; les grains de café torréfiés étant transférés dans un dispositif de traitement de café (60, 70) pour la préparation de boisson, le dispositif de torréfaction (50) comprenant une fonction de transfert de données pour communiquer des paramètres de produit des grains de café torréfiés d'un certain type au dispositif de traitement de café (60, 70) ;
le dispositif de traitement de café (60, 70) recevant des grains de café torréfiés d'un ou plusieurs types à partir du dispositif de torréfaction (50) ; le dispositif de traitement de café comprenant un lecteur de données (62, 72) pour obtenir les informations des paramètres de produit des grains de café torréfiés ; le dispositif de traitement de café (60, 70) comprenant en outre une unité de commande configurée pour adapter les paramètres de traitement utilisés pour la préparation de boisson en fonction des paramètres de produit des grains de café torréfiés ;
**caractérisé par** le dispositif de torréfaction comprenant un moyen de lecture (53) pour identifier les caractéristiques des grains de café distribués à celui-ci, le dispositif de torréfaction (50) comprenant en outre une unité de commande configurant le profil de torréfaction des grains en fonction des caractéristiques récupérées à partir du moyen de lecture (53) et/ou des caractéristiques des grains dans une base de données (51) dans cette unité de commande.

2. Appareil de torréfaction et de traitement pour grains de café selon la revendication 1, dans lequel le dispositif de traitement de café (60, 70) comprend un moulin à café (60) et/ou un dispositif d'extraction de boisson de café (70).

3. Appareil de torréfaction et de traitement pour grains de café selon l'une quelconque des revendications 1 à 2, dans lequel les paramètres de traitement utilisés pour la préparation de boisson comprennent des paramètres de meulage et/ou de meulage partiel et/ou des paramètres d'extraction de café.

4. Appareil de torréfaction et de traitement pour grains de café selon l'une quelconque des revendications précédentes, dans lequel les grains de café sont des grains de café verts et/ou partiellement torréfiés.

5. Appareil de torréfaction et de traitement pour grains de café selon l'une quelconque des revendications précédentes, dans lequel les grains de café reçus par le dispositif de torréfaction (50) comprennent des moyens d'identification (41) avec les caractéristiques de ces grains de café, à lire par le moyen de lecture (53) dans le dispositif de torréfaction (50), ces moyens d'identification (41) étant des moyens d'identification optiques, tels qu'un code à barres, OID et/ou un code QR, et/ou des moyens d'identification électromagnétiques tels qu'une étiquette RFID.

6. Appareil de torréfaction et de traitement pour grains de café selon l'une quelconque des revendications précédentes, dans lequel les caractéristiques des grains de café reçus par le dispositif de torréfaction (50) sont un ou une pluralité de ce qui suit : type de grains de café, origine des grains de café, volume de lot, niveau ou niveaux de torréfaction recommandés, date de récolte, date de production, données de production, données relatives à l'agriculteur, date d'expiration, informations relatives à la société et/ou à la commercialisation.

7. Appareil de torréfaction et de traitement pour grains de café selon l'une quelconque des revendications précédentes, dans lequel les paramètres de produit des grains de café torréfiés d'un certain type comprennent les caractéristiques des grains de café et un ou une pluralité de ce qui suit : niveau de torréfaction, profil de torréfaction, CTN, diagramme de profil d'arôme, recommandation de boisson adéquate, date de torréfaction, meilleure date limite de consommation.

8. Appareil de torréfaction et de traitement pour grains de café selon l'une quelconque des revendications précédentes, dans lequel les paramètres de traitement utilisés par le dispositif de traitement de café (60, 70) pour la préparation de boisson sont adaptés en fonction du type de boisson à préparer, en combinaison avec les paramètres de produit des grains de café torréfiés.

9. Appareil de torréfaction et de traitement pour grains de café selon l'une quelconque des revendications précédentes, dans lequel la fonction de transfert de données entre le dispositif de torréfaction (50) et le dispositif de traitement de café associé (60, 70) est de type sans fil tel que Wi-Fi, Bluetooth ou CCP.

10. Appareil de torréfaction et de traitement pour grains de café selon l'une quelconque des revendications 1 à 8, dans lequel la fonction de transfert de données entre le dispositif de torréfaction (50) et le dispositif de traitement de café associé (60, 70) est de type filaire tel qu'une communication de série.

11. Appareil de torréfaction et de traitement pour grains de café selon l'une quelconque des revendications précédentes, dans lequel le dispositif de torréfaction (50) a une fonction de transmission de données de type sans fil, telle que Wi-Fi, Bluetooth ou CCP et/ou de type filaire, telle que de série.

12. Appareil de torréfaction et de traitement pour grains de café selon l'une quelconque des revendications précédentes, dans lequel le dispositif de traitement de café (50) a une fonction de réception de données de type sans fil, telle que Wi-Fi, Bluetooth ou CCP et/ou de type filaire, telle que de série.

13. Appareil de torréfaction et de traitement pour grains de café selon l'une quelconque des revendications précédentes, dans lequel les données entre le dispositif de torréfaction (50) et le dispositif de traitement de café associé (60, 70) sont transférées directement entre les deux dispositifs et/ou indirectement par l'intermédiaire d'un troisième moyen (pont), tel qu'une application pour téléphone intelligent ou un service infonuagique.

14. Procédé de torréfaction et de traitement de grains de café à l'aide d'un appareil de torréfaction et de traitement selon l'une quelconque des revendications 1 à 13, comprenant les étapes suivantes :
- la distribution d'une certaine quantité de grains de café dans le dispositif de torréfaction (50) ;
- la lecture des caractéristiques des grains de café distribués ;
- la réalisation d'un processus de torréfaction selon les caractéristiques lues et/ou des informations de base de données et/ou d'un choix ou d'une sélection d'un utilisateur ;
- la distribution des grains de café torréfiés dans un appareil de traitement (60, 70) avec des paramètres de produit codés de ces grains de café ;
- la lecture des paramètres de produit dans l'appareil de traitement ;
- la réalisation du meulage et/ou de la préparation de boisson en fonction des paramètres de produit lus.

15. Utilisation d'un appareil de torréfaction et de traitement selon l'une quelconque des revendications 1 à 13 pour distribuer une boisson au café d'un certain type et/ou d'une certaine quantité de café moulu.
